Europäisches Patentamt

European Patent Office

Office européen des brevets

(19)

(11) Veröffentlichungsnummer: **0 010 701**
**B1**

# (12) EUROPÄISCHE PATENTSCHRIFT

(45) Veröffentlichungstag der Patentschrift:
31.08.83

(21) Anmeldenummer: 79104046.2

(22) Anmeldetag: 19.10.79

(51) Int. Cl.³: **C 08 F 10/00, C 08 F 4/64**

(54) **Verfahren zum Herstellen von Homo- und Copolymerisaten von Alpha-monoolefinen.**

(30) Priorität: 26.10.78 DE 2846542

(43) Veröffentlichungstag der Anmeldung:
14.05.80 Patentblatt 80/10

(45) Bekanntmachung des Hinweises auf die Patenterteilung:
31.08.83 Patentblatt 83/35

(84) Benannte Vertragsstaaten:
AT BE DE FR GB IT NL

(56) Entgegenhaltungen:
DE-A-2 052 525
DE-A-2 645 530
DE-A-2 722 098

Die Akte enthält technische Angaben, die nach dem
Eingang der Anmeldung eingereicht wurden und die
nicht in dieser Patentschrift enthalten sind.

(73) Patentinhaber: **BASF Aktiengesellschaft,
Carl-Bosch-Strasse 38, D-6700 Ludwigshafen (DE)**

(72) Erfinder: **Klaerner, Peter, Dr., Dipl.-Chem.,
Hauptstrasse 62, D-6719 Battenberg (DE)**
Erfinder: **Staiger, Gerhard, Dr., Dipl.-Chem.,
Virchowstrasse 26, D-6712 Bobenheim-Roxheim 2 (DE)**
Erfinder: **Schweier, Guenther, Dr., Dipl.-Chem.,
Mundenheimer Strasse 148, D-6700 Ludwigshafen (DE)**
Erfinder: **Jaggard, James F.R., Dr., Dipl.-Chem.,
Bruesseler Ring 45, D-6700 Ludwigshafen (DE)**

Verfahren zum Herstellen von Homo- und Copolymerisaten von $\alpha$-Monoolefinen

Die vorliegende Erfindung betrifft ein Verfahren zum Herstellen von Homo- und Copolymerisaten von $C_2$- bis $C_6$-$\alpha$-Monoolefinen durch Polymerisation des bzw. der Monomeren bei Temperaturen im Bereich von 30 bis 200°C unter Drücken im Bereich von 0,1 bis 200 bar mittels eines Ziegler-Natta-Katalysators aus (I) einer Titantrichlorid-Komponente und (II) einer Aluminiumalkyl-Komponente der allgemeinen Formel $AlR_3$ bzw. $ClAlR_2$ – worin R für einen $C_1$- bis $C_8$-Alkylrest steht – im Atomverhältnis Titan aus der Katalysatorkomponente (I): Aluminium aus der Katalysator-Komponente (II) von 1:1 bis 1:100, wobei die eingesetzte Titantrichlorid-Komponente (I) eine solche ist, die erhalten wird, indem man

(1) zunächst eine einschlägig übliche, aus Titantrichlorid bestehende oder im wesentlichen aus Titantrichlorid bestehende Katalysator-Komponente mit einem Kohlenwasserstoff-Gemisch aus einem Alkan-Kohlenwasserstoff und einen Benzol-Kohlenwasserstoff befeuchtet, mit der Massgabe, dass das Gewichtsverhältnis Katalysatorkomponente:befeuchtendes Kohlenwasserstoffgemisch 1:X beträgt, wobei X eine Zahl im Bereich zwischen 0,05 und 0,5 ist; und

(2) dann die mit dem Kohlenwasserstoff-Gemisch befeuchtete Katalysator-Komponente unter Inertgas und ständiger mechanischer Durchmischung in einem Rotationsverdampfer innerhalb einer Zeitspanne von 0,5 bis 5 Stunden unter einem Druck von 0,90 bis 1,10 bar trocknet.

Verfahren dieser Art sind bekannt (siehe DE-A-2645530) und haben sich in der Technik gut bewährt, lassen jedoch noch eine Reihe kleinerer oder grösserer Wünsche offen. So ist es z.B. die einzusetzende Titantrichlorid-Komponente (I), die manchen Vorstellungen nicht ganz gerecht wird. Es ist beispielsweise nicht oder nur auf relativ umständlichen Wegen möglich, Titantrichlorid-Komponenten (I) so auszugestalten, dass sie Polymerisate mit optimalen morphologischen Eigenschaften zu liefern vermögen. Dies gilt nicht nur für die Polymerisation in flüssigen Medien, sondern auch insbesondere für den Fall der sogenannten «Gasphasenpolymerisation», – also der Polymerisation in Abwesenheit flüssiger Hilfsmedien und flüssiger Monomerer: Es besteht z.B. die jeweils mehr oder minder stark ausgeprägte Tendenz, dass die entstehenden kleinteiligen Polymerisate mit einer breiten Korngrössenverteilung anfallen, d.h. Korngrössen aufweisen, die von relativ sehr gross (Durchmesser etwa 2000 µm) bis zu relativ sehr klein (Durchmesser etwa 100 µm) reichen, – wobei vor allem die sogenannten «Feinstkornanteile» (Durchmesser < 200 µm) in hohem Masse unerwünscht sind (Gefahr des Verstaubens, Gefahr von Staubexplosionen, Erschwerung der Weiterverarbeitbarkeit).

Hieraus hat sich die Aufgabenstellung zur vorliegenden Erfindung ergeben: Eine technisch fortschrittliche Titantrichlorid-Komponente (I) aufzuzeigen, insbesondere eine solche, die es ermöglicht, Polymerisate mit günstigen morphologischen Eigenschaften, wie einer wünschenswert engen Korngrössenverteilung, herzustellen unter ausgeprägter Zurückdrängung – bis hin zur praktischen Vermeidung – des Feinstkornanteils.

Es wurde gefunden, dass die gestellte Aufgabe gelöst werden kann mit einer Titantrichlorid-Komponente (I) der eingangs definierten Art, wenn man bei deren Herstellung in Stufe (1) ein bestimmtes n-Hexan-Toluol-Gemisch verwendet und in Stufe (2) in einem bestimmten Temperaturbereich oberhalb der Siedetemperatur des Toluols trocknet.

Gegenstand der vorliegenden Erfindung ist dementsprechend ein Verfahren zum Herstellen von Homo- und Copolymerisaten von $C_2$- bis $C_6$-$\alpha$-Monoolefinen durch Polymerisation des bzw. der Monomeren bei Temperaturen im Bereich von 30 bis 200°C unter Drücken im Bereich von 0,1 bis 200 bar mittels eines Ziegler-Natta-Katalysators aus (I) einer Titantrichlorid-Komponente und (II) einer Aluminiumalkyl-Komponente der allgemeinen Formel $AlR_3$ bzw. $ClAlR_2$ – worin R für einen $C_1$- bis $C_8$-Alkylrest steht – im Atomverhältnis Titan aus der Katalysatorkomponente (I):Aluminium aus der Katalysator-Komponente (II) von 1:1 bis 1:100, wobei die eingesetzte Titantrichlorid-Komponente (I) eine solche ist, die erhalten wird, indem man

(1) zunächst eine einschlägig übliche, aus Titantrichlorid bestehende oder im wesentlichen aus Titantrichlorid bestehende Katalysator-Komponente mit einem Kohlenwasserstoff-Gemisch aus einem Alkan-Kohlenwasserstoff und einem Benzol-Kohlenwasserstoff befeuchtet, mit der Massgabe, dass das Gewichtsverhältnis Katalysator-Komponente:befeuchtetes Kohlenwasserstoffgemisch 1:X beträgt, wobei X eine Zahl im Bereich zwischen 0,05 und 0,5 ist und

(2) dann die mit dem Kohlenwasserstoff-Gemisch befeuchtete Katalysator-Komponente unter Inertgas und ständiger mechanischer Durchmischung in einem Rotationsverdampfer innerhalb einer Zeitspanne von 0,5 bis 5 Stunden unter einem Druck von 0,90 bis 1,10 bar trocknet.

Das erfindungsgemässe Verfahren ist dadurch gekennzeichnet, dass die eingesetzte Titantrichlorid-Komponente (I) eine solche ist, bei deren Herstellung man

(i) in Stufe (1) ein Kohlenwasserstoff-Gemisch aus 100 Volumenteilen n-Hexan und 15 bis 100 Volumenteilen Toluol verwendet, und

(ii) in Stufe (2) bei einer Temperatur trocknet, die 5 bis 50°C oberhalb der – unter Normalbedingungen gegebenen – Siedetemperatur des Toluols liegt.

Zu dem erfindungsgemässen Verfahren ist im einzelnen das Folgende zu bemerken:

Das Polymerisationsverfahren als solches kann – unter Beachtung der kennzeichnenden Besonderheit – in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren, Lösungs-Polymerisationsverfahren oder Trockenphasen-Polymerisationsverfahren. Die erwähnten technologischen Ausgestaltungen – mit anderen Worten: die technologischen Varianten der Polymerisation von α-Monoolefinen nach Ziegler-Natta – sind aus der Literatur und Praxis wohlbekannt, so dass sich nähere Ausführungen zu ihnen erübrigen. Zu bemerken ist allenfalls noch, dass die neue Titantrichlorid-Komponente (I) – wie entsprechende bekannte Katalysatorkomponenten – z.B. ausserhalb oder innerhalb des Polymerisationsgefässes mit der Aluminiumalkyl-Komponente (II) zusammengebracht werden kann; im letztgenannten Fall etwa durch räumlich getrennten Eintrag der Komponenten, die im übrigen in Form einer Suspension (Komponente (I)) bzw. Lösung (Komponente (II)) gehandhabt werden können. Zu bemerken ist weiterhin, dass sich das neue Verfahren vornehmlich zum Herstellen von Homopolymerisaten des Propylens sowie Copolymerisaten des Propylens mit untergeordneten Mengen Ethylen eignet. Es kommt ferner in Betracht zum Herstellen von Homopolymerisaten des Ethylens, zum Herstellen von Copolymerisaten des Ethylens sowie Propylens mit höheren α-Monoolefinen und zum Herstellen von Homopolymerisaten höherer α-Monoolefine wie Buten-1, 4-Methyl-penten-1- und Hexen-1. Die Regelung der Molekulargewichte der Polymerisate kann in einschlägig üblicher Weise erfolgen, insbesondere mittels Wasserstoff als Regulans.

Zu der neuen Titantrichlorid-Komponente (I) selbst, ist das folgende zu sagen:

Als Ausgangsstoffe dienen einschlägig übliche, aus Titantrichlorid bestehende oder im wesentlichen aus Titantrichlorid bestehende Katalysator-Komponenten. Diese setzen sich bekanntlich im wesentlichen aus vier Gruppen zusammen:

(a) Titantrichloride als solche und Titantrichlorid-Cokristallisate mit Metallhalogeniden, insbesondere Aluminiumchlorid, etwa der Formel TiCl$_3$·⅓AlCl$_3$. Siehe hierzu z.B. die US-PS 3 128 252 und 3 814 743.

Wie sich gezeigt hat, ist aus dieser Gruppe für den erfindungsgemässen Zweck besonders gut geeignet ein sehr feinteiliges Cokristallisat der Formel TiCl$_3$·⅓AlCl$_3$.

(b) Mit Elektronendonatoren bzw. Lewis-Basen modifizierte Titantrichloride bzw. Titantrichlorid-Cokristallisate der unter (a) bezeichneten Art. Derartige modifizierte Titantrichlorid-Katalysatorkomponenten gibt es in besonders grosser Vielfalt, da sie bekanntlich eine Reihe von Vorteilen mit sich bringen. Um unnötige Wiederholungen zu vermeiden sei im gegebenen Zusammenhang schlaglichtartig beispielsweise verwiesen auf die GB-PS 851 113, die FR-PS 1 231 089 sowie die DE-OS 2 301 136, 2 400 190, 2 441 541 und 2 519 582.

Für den erfindungsgemässen Zweck kommen aus diesen Gruppen vor allem in Betracht sehr feinteilige Cokristallisate der Formel TiCl$_3$·⅓AlCl$_3$, welche mit den folgenden Donatoren bzw. Basen

modifiziert sind: Ether, wie dem Diisoamylether und dem Diisopropylether; Estern, wie den Benzoesäureisoamylester und dem Phenylessigsäureethylester; Phosphinen, wie dem Tributylphosphin; Phosphinoxiden, wie dem Tributylphosphinoxid; sowie Säureamiden, wie dem Hexamethylphosphorsäuretriamid.

Hierbei ist es im allgemeinen günstig, wenn das Molverhältnis Titantrichlorid bzw. Cokristallisat: Donator bzw. Base etwa 1:12 bis 1:2 beträgt.

(c) Sogenannte «voraktivierte» Titantrichloride bzw. Titantrichlorid-Cokristallisate der unter (a) bezeichneten Art. Diese sind bekanntlich Titantrichlorid-Katalysatorkomponenten, die vor dem eigentlichen Zusammenbringen mit der Aluminiumalkyl-Komponente (II) mit Aluminiumalkyl-Verbindungen des nämlichen Typs voraktiviert sind. Häufig geht man dabei von Titantetrachlorid aus, das durch die Aluminiumalkyl-Verbindung zu Titantrichlorid reduziert wird.

(d) Titantrichloride und deren Cokristallisate, die sowohl mit Elektronendonatoren bzw. Lewis-Basen modifiziert als auch voraktiviert sind. Solche Titantrichlorid-Katalysatorkomponenten können in gewisser Weise als eine Kombination der unter (b) und (c) bezeichneten aufgefasst werden. Ein typisches Beispiel ist der DE-OS 2 335 047 zu entnehmen.

Die als Ausgangsstoffe dienenden, im Vorstehenden abgehandelten primären – an sich einschlägig üblichen und wohlbekannten – Titantrichlorid-Katalysatorkomponenten werden erfindungsgemäss in bestimmter Weise mit geringen Mengen eines bestimmten Kohlenwasserstoff-Gemisches behandelt. Die Komponenten des letzteren sind n-Hexan und Toluol (Kp$_n$ = 110,8°C).

Das Befeuchten der primären Titantrichlorid-Katalysatorkomponente mit dem Kohlenwasserstoff-Gemisch kann in einfacher Weise so erfolgen, wie man üblicherweise feinteilige Feststoffe mit geringen Mengen Flüssigkeit benetzt. Die entsprechenden Verfahrensweisen und Vorrichtungen sind wohlbekannt, so dass hier nicht näher darauf eingegangen zu werden braucht. Auch das Trocknen der mit dem Kohlenwasserstoff-Gemisch befeuchteten Katalysatorkomponente ist an sich mit keinen Besonderheiten verbunden:

Man trocknet die mit dem Kohlenwasserstoff-Gemisch befeuchtete Katalysator-Komponente unter Inertgas, wie insbesondere Stickstoff, und ständiger mechanischer Durchmischung in einem Rotationsverdampfer innerhalb einer Zeitspanne von 0,5 bis 5, vorzugsweise 1 bis 3 Stunden unter einem Druck 0,90 bis 1,10, vorzugsweise 0,95 bis 1,05 bar bei einer Temperatur die 5 bis 50, vorzugsweise 10 bis 30°C oberhalb der – unter Normalbedingungen – Siedetemperatur des Toluols liegt.

In jedem Falle ist zu beachten, dass sich beim erfindungsgemässen Arbeiten – wie beim Umgang mit Titantrichorid-Katalysatorkomponenten üblich – ein strenger Ausschluss von Feuchtigkeit und Sauerstoff empfiehlt.

**Beispiel**

Herstellung der Titantrichlorid-Komponente (I) 50 g eines Stoffes der Formel $TiCl_3 \cdot \frac{1}{3}AlCl_3$ mit einer maximalen Teilchengrösse von 1 mm und Benzoesäureisoamylester werden im Molverhältnis 6:1 in einer Schwingmühle vermahlen, wobei die Vermahlung erfolgt mit Stahlkugeln von 25 mm Durchmesser bei einer Mahlbeschleunigung von 50 $m.sec^{-2}$ über eine Zeitspanne von 30 Stunden bei einer Temperatur von 10°C. Das so erhaltene Mahlgut wird in 150 ml Heptan suspendiert, worauf man 30 ml Diisopentylether sowie 8 ml Titantetrachlorid zufügt und 30 Minuten bei 70°C rührt. Danach wird der entstandene Feststoff auf einer Glasfritte unter Inertgas isoliert. Im Zuge eines weiteren Schrittes werden sodann in einem 1 l Rührkolben 150 ml Hexan sowie der genannte Feststoff vorgelegt und auf eine Temperatur von etwa −2°C gebracht. Unter Aufrechterhaltung dieser Temperatur durch Kühlen sowie unter Rühren werden dann innerhalb von 4 Stunden 250 ml einer 20 gew.-%igen Lösung von Diethylaluminiumchlorid in Hexan zugetropft, worauf mit einer Geschwindigkeit von etwa 0,5°C/Min. zunächst auf eine Temperatur von 20°C und anschliessend mit einer Geschwindigkeit von etwa 1,5°C/Min auf eine Temperatur von 65°C gebracht wird.

Bei dieser Temperatur wird die erhaltene Suspension noch 1 Stunde gerührt, worauf das Suspendierte durch Filtration isoliert wird.

Die auf diese Weise gewonnene primäre Titantrichlorid-Katalysatorkomponente wird erfindungsgemäss modifiziert, indem sie zunächst mit einem Kohlenwasserstoff-Gemisch aus 100-Volumenteilchen n-Hexan und 100 Volumenteilchen Toluol befeuchtet wird, − was durch viermaliges Waschen mit je 50 ml des Gemisches und anschliessendes Absaugen auf einer Glasfritte erfolgt (das Gewichtsverhältnis Katalysator–Komponente : befeuchtendes Kohlenwasserstoffgemisch beträgt dann etwa 1 : 0,17). In einem zweiten Arbeitsgang wird die befeuchtete Katalysatorkomponente sodann unter Stickstoff und ständiger mechanischer Durchmischung in einem Rotationsverdampfer innerhalb einer Stunde unter einem Druck von 1,01 bar bei einer Temperatur von 120°C getrocknet.

**Polymerisation**

In einen 10 Liter fassenden Rührautoklaven werden eingebracht: 5 l flüssiges Propylen, 15 Nl Wasserstoff (als Molekulargewichtsregler) sowie die in der unten stehenden Tabelle angegebenen Mengen an erfindungsgemäss modifizierter Titantrichlorid-Katalisatorkomponente (I) und Diethylaluminiumchlorid als Katalysatorkomponente (II).

Die Polymerisation erfolgt bei einer Temperatur von 80°C − entsprechend einem Druck von 39,5 bar − über eine Zeitspanne von 3 Stunden, wonach die Reaktion durch Entspannen abgebrochen und das entstandene Polymerisat isoliert wird.

Nähere Angaben zum Polimerisat finden sich in der folgenden Tabelle.

**Tabelle**

| Katal.-Komp. I mg | II mg | Aus-beute g | g Poly-mer pro g $TiCl_3$ | Korn-⌀ <200 µm % | [η] dl/g | Schütt-gew. g/l |
|---|---|---|---|---|---|---|
| 250 | 1206 | 1275 | 6600 | 0,4 | 1,2 | 505 |

**Patentanspruch**

Verfahren zum Herstellen von Homo- und Copolymerisaten von $C_2$- bis $C_6$-α-monoolefinen durch Polymerisation des bzw. der Monomeren bei Teperaturen im Bereich von 30 bis 200°C unter Drükken im Bereich von 0,1 bis 200 bar mittels eines Ziegler-Natta-Katalysators aus (I) einer Titanchlorid-Komponente und (II) einer Aluminiumalkyl-Komponente der allgemeinen Formel $AlR_3$ bzw. $ClAlR_2$ − worin R für einen $C_1$- bis $C_8$-Alkylrest steht − im Atomverhältnis Titan aus der Katalysatorkomponente (I):Aluminium aus der Katalysator-Komponente (II) von 1 : 1 bis 1 : 100, wobei die eingesetzte Titantrichlorid-Komponente (I) eine solche ist, die erhalten wird, indem man

(1) zunächst eine einschlägig übliche, aus Titantrichlorid bestehende oder im wesentlichen aus Titantrichlorid bestehende Katalysator-Komponente mit einem Kohlenwasserstoff-Gemisch aus einem Alkan-Kohlenwasserstoff und einem Benzol-Kohlenwasserstoff befeuchtet, mit der Massgabe, dass das Gewichtsverhältnis Katalysator − Komponente:befeuchtendes Kohlenwasserstoffgemisch 1:X beträgt, wobei X eine Zahl im Bereich zwischen 0,05 und 0,5 ist und

(2) dann die mit dem Kohlenwasserstoffgemisch befeuchtete Katalysator-Komponente unter Inertgas und ständiger mechanischer Durchmischung in einem Rotationsverdampfer innerhalb einer Zeitspanne von 0,5 bis 5 Stunden unter einem Druck von 0,90 bis 1,10 bar trocknet, dadurch gekennzeichnet, dass die eingesetzte Titantrichlorid-Komponente (I) eine solche ist, die bei deren Herstellung man

(i) in Stufe (1) ein Kohlenwasserstoff-Gemisch aus 100 Volumenteilen n-Hexan und 15 bis 100 Volumenteilen Toluol verwendet, und

(ii) in Stufe (2) bei einer Temperatur trocknet, die 5 bis 50°C oberhalb der − unter Normalbedingungen gegebenen − Siedetemperatur des Toluols liegt.

**Claims**

A process for the production of homopolymers and copolymers of $C_2$-$C_6$-α-monoolefins by polymerisation of the monomer or monomers at a temperature of from 30 to 200°C under a pressure of from 0.1 to 200 bar by means of a Ziegler-Natta catalyst consisting of (I) a titanium trichloride component and (II) an aluminium-alkyl component of the general formula $AlR^3$ or $ClAlR^2$, where R is $C_1$-$C_8$-alkyl, the atomic ratio of titanium from catalyst component (I) to aluminium from catalyst component (II) being from 1 : 1 to 1 : 100, the titanium trichloride component (I) used having been prepared by

(1) first moistening a conventional catalyst component consisting wholly or essentially of titanium trichloride with a mixture of an alkane hydrocarbon and a benzene hydrocarbon, with the proviso that the weight ratio of catalyst component to moistening hydrocarbon mixture is 1 : X, X being a number between 0.05 and 0.5, and

(2) then drying the catalyst component moistened with the hydrocarbon mixture under inert gas, with continuous mechanical mixing in a wiped-film evaporator, in the course of 0.5 to 5 hours under a pressure of from 0.90 to 1.10 bar,

wherein the titanium trichloride component (I) used is one, in the preparation of which

(i) in stage (1) a hydrocarbon mixture of 100 parts by volume of n-Hexane and 15 to 100 parts by volume of toluene is used, and

(ii) in stage (2) dyring is carried out at a temperature which is 5 to 50°C above the boiling temperature of toluene at standard temperature and pressure.

## Revendication

Procédé pour la préparation d'homo- et de copolymères d'α-monooléfines en $C_2$ à $C_6$ par polymérisation du ou des monomères à une température se situant dans la gamme de 30 à 200°C, sous une pression comprise entre 0,1 et 200 bars, au moyen d'un catalyseur de Ziegler-Natta formé de : (I) un constituant au trichlorure de titane et (II) un constituant aluminium-alcoyle de formule générale $AlR_3$ ou $ClAlR_2$ – dans laquel-

le R est mis pour un radical alcoyle en $C_1$ à $C_8$ – dans un rapport molaire du titane du constituant de catalyseur (I) à l'aluminium du constituant de catalyseur (II) de 1:1 à 1:100, le constituant au trichlorure de titane (I) utilisé étant un composé qui est obtenu

(1) en imprégnant tout d'abord un constituant de catalyseur couramment utilisé à cet effet, composé de trichlorure de titane ou composé essentiellement de trichlorure de titane, avec un mélange d'hydrocarbures formé d'un hydrocarbure de la série des alcanes et d'un hydrocarbure benzénique, le rapport en poids du constituant de catalyseur au mélange d'hydrocarbures d'imprégnation s'élevant à 1 : X, X étant un nombre compris entre 0,05 et 0,5, et

(2) en séchant ensuite le constituant de catalyseur, imprégné du mélange d'hydrocarbures, sous une atmosphère de gaz inerte et sous mélange mécanique continu dans un évaporateur rotatif, en un laps de temps de 0,5 à 5 heures sous une pression de 0,90 à 1,10 bars,
caractérisé en ce que le constituant au trichlorure de titane (I) utilisé est un composé pour la préparation duquel

(i) on utilise, dans la phase (1), un mélange d'hydrocarbures formé de 100 parties en volume de n-hexane et de 15 à 100 parties en volume de toluène et

(ii) on sèche, dans la phase (2), à un temperature qui est supérieure de 5 à 50°C à la température d'ébullition – déterminée dans des conditions normales – du toluène.